Europäisches Patentamt

European Patent Office

Office européen des brevets

(19)

(11) Publication number: 0 223 138

A1

## (12) EUROPEAN PATENT APPLICATION

(21) Application number: 86115171.0

(22) Date of filing: 01.11.86

(51) Int. Cl.4: F16G 11/06

(30) Priority: 14.11.85 ZA 858728
07.08.86 ZA 865936

(43) Date of publication of application:
27.05.87 Bulletin 87/22

(84) Designated Contracting States:
AT BE CH DE ES FR GB GR IT LI LU NL SE

(71) Applicant: Benischke, Heinz Dieter Anton
Du Barry Centre cnr Marshall & Berea
Streets
City & Suburban Johannesburg(ZA)

(72) Inventor: Benischke, Heinz Dieter Anton
Du Barry Centre cnr Marshall & Berea
Streets
City & Suburban Johannesburg(ZA)

(74) Representative: Galgut, John
JOHN GALGUT & CO c/o Messrs Gouldens
118, Chancery Lane
London WC2A 1JJ(GB)

(54) Clamps.

(57) A clamp comprises a pair of identical plates - (44) forming a connector plate (16) and a pair of clamping arms (12, 14) pivotally connected to the connector plate (16) at spaced locations (50, 52). A nut (18) and a bolt (20) located at the ends (26) of the arms (12, 14) remote from the connector plate - (16) holds the clamping arms (12, 14) together. The nut (18) is carried by one arm (14) to pivot about an axis (54) at right angles to its bore (56). The bolt - (20) passes through a slot (60) in the other arm (12) and is capable of swinging free from said other arm.

EP 0 223 138 A1

Fig 4

FIG 3

This invention relates to clamps for ropes.

## BACKGROUND TO THE INVENTION

It is necessary in many applications and in particular in the mining industry to clamp together two lengths of rope. Innumerable suggestions have been made for clamps for this purpose. Typical proposals are those disclosed in U S Patents 3 544 955 (Heres Ruiz) 2 986 053 (Atman et al) and 3 248 684 (Hubbard et al). These are all multipart clamps which are difficult to use and in which a minimum of mechanical advantage is obtained in the clamping force. A clamp for clamping together three cables is disclosed in U S Patent 4 179 779 - (Bradbury). It comprises a base and two arms pivotted to the ends of the base. The arms are clamped together by a nut and bolt the latter passing through the free ends of the arms. The bolt and nut are separate parts which must be manipulated separately with the clamp for fixing purposes. This complicates the use of the clamp.

Currently however one of the most popular clamps comprises a U-bolt and a shaped saddle having bores through which the ends of the U-bolt passes. Nuts engage the projecting ends and force the saddle towards the bight of the U-bolt to clamp the ropes in position. This clamp too comprises four separate parts which makes for difficulty in assembling the clamp about the wire ropes. This is because first the U-bolt must be applied to the ropes, then the saddle must be threaded on to the U-bolt, the nuts now are now brought to and screwed on to ends of the U-bolt and finally these nuts must be tightened. This is time consuming and can be awkward especially where the workman is standing in an uncomfortable position especially when perched high up near the hanging wall of a drive.

It is therefore an object of the invention to provide a clamp that is relatively easy to apply to ropes and requires a minimum of manipulation without the necessity of adding any partw when applying the clamp to the ropes.

## SUMMARY OF THE INVENTION

Accordingly the invention provides according to one aspect, a clamp comprising connector plate means and a pair of clamping arms pivotally connected to the connector plate means at spaced locations. Nut and bolt means located at the ends of the arms remote from the connector plate means hold the clamping arms together. The nut is carried by one arm to swing about an axis at right angles to its bore. The bolt passes through a slot in the other arms and is capable of swinging free from said other arm.

According to another aspect the invention provides a clamp comprising first and second clamping members, each having first and second ends, a front face, a bight in each front face intermediate its ends to receive a wire rope. The second clamping member has an abutment surface formed thereon facing the opposite direction to the said front face thereof. There is connector plate means to which the first ends of the clamping members are pivotted at spaced locations so that the clamping members can move from relatively closed positions, in which the said front faces abut, to relatively open positions, and pressure means adapted to connect the said second ends of the clamping members. The pressure means comprises a nut and a bolt. The nut has a transverse bore therethrough and is nut means being swingably carried by the first clamping member so as to be capable of swinging about a pivot axis normal to the axis of its bore. The bolt threadedly engages the cross-bore. It has a head at one end thereof and is capable of being moved from a remote position remote from the said second clamping member to a clamping position in which the bolt head can abut the abutment surface when the clamping members are in their closed position. The arrangement is such that the members can pivot about the pivot connecting means into their open positions to permit two ropes to be inserted into the space between the bights whereafter the bolt is moved to its clamping position to abut the abutment surface and the members can be moved towards their closed position by the pressure means to clamp the ropes in the bights.

Each arm (or clamping member) may comprise two shaped metal plate parts each having a depressed central portion and outer potions on each side thereof, the two central portions of the two plate parts resting one against the other and being secured together, preferably by welding, so that the said outer portions are spaced from one another to form between them, grooves to receive respectively the connecting plate and pressure means. The bight is preferably formed by piercing and the piercing operation preferably takes place from the same side of the each plate part so that the sharp edges of the pierced bight will be adjacent one another and the other outside edges of the will be rounded. If desired, a spacer plate can be inserted between the plate parts to increase the size of the grooves thus permitting a larger diameter nut and hence a larger diameter bolt to be used.The spacer plate may extend into one of the grooves so that a pair of connecting plates may be provided connecting together the said members.


SHORT DESCRIPTION OF THE DRAWINGS

Embodiments of the invention will now be described with reference to and the accompanying drawings.

In the drawings:-

Figure 1 is a front view of a clamp of the invention in the closed position,

Figure 2 is a view in the direction of arrow 2 in Figure 1,

Figure 3 is a front view partially in section of a clamp of the invention in its fully open position,

Figure 4 is a perspective view of the clamp.

Figure 5 is a perspective view showing clamps being applied to two wire ropes,

Figure 6 is an end view of a modified clamp of the invention in its closed position,

Figures 7 and 8 are front views of blanks from which side parts are manufactured,

Figure 9 is a side view of a one of the blanks,

Figure 10 is a view similar to Figure 3 of a modified clamp of the invention,

Figure 11 is a view similar to Figure 1 of a further modified clamp of the invention,

Figure 12 is a front view of yet another clamp of the invention, and

Figures 13 to 15 are diagrammatic views showing alternative shapes of bights.

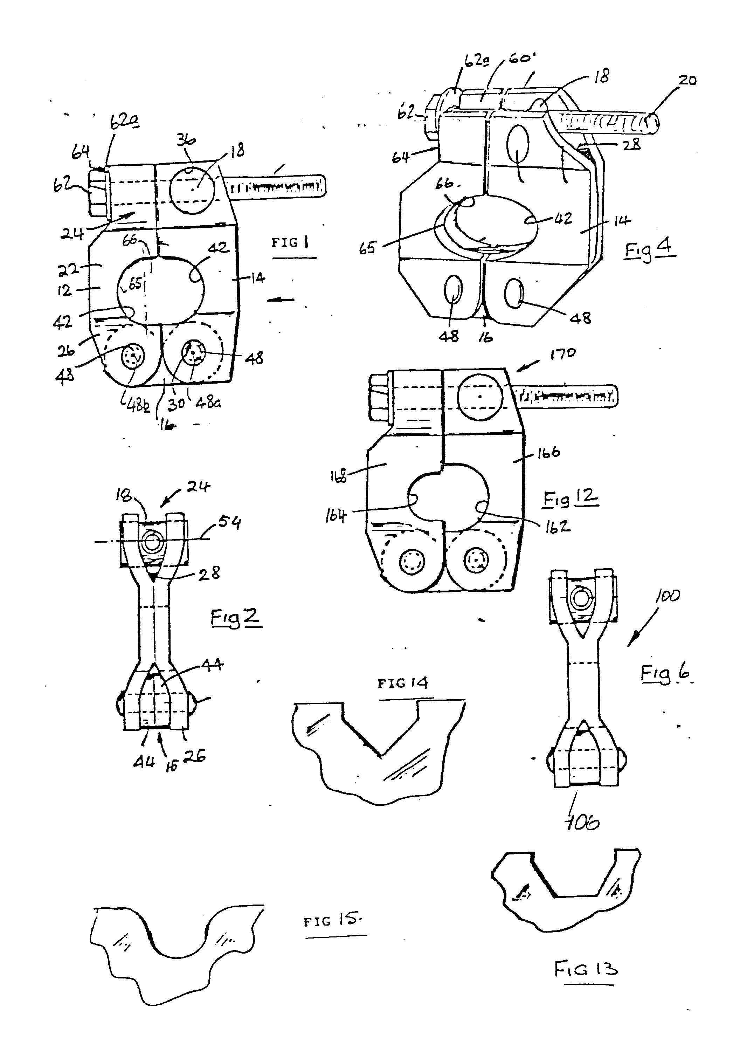

Referring now to Figures 1 to 4, there is shown a clamp 10 of the invention. The clamp comprises a pair of arms or clamping members 12 and 14, pivot plate means 16 and a pressure device comprising a cylindrical nut 18 and a bolt 20 engaging in the nut 18.

Each arm 12 and 14 comprises two steel plate stampings welded to each other to form a central part 22 and bifurcated ends 24 and 26, the weld being a single line weld 28 at the commencement of the bifurcated end 24. A pair of apertures 30 are provided at the walls 32 and 34 of the end 26. A pair of apertures 36 are provided at the walls 38 and 40 of the end 24 of the arm 12. Bights 42 are formed in the facing or front surfaces of the arms 12 and 14 between their ends 24 and 26 to constitute a wire receiving opening as will be described below.

The pivot plate means 16 comprises two identical metal stampings 44 lying side by side. Apertures 46 are punched into the stampings. The pivot plate means 16 are received between the walls 32 and 34 so that the apertures 46 and 30 are aligned. Pivot pins 48 pass through the apertures 46 and 30 and are welded to the outside of the walls. Thus the arms 12 and 14 are connected to each other by being pivotted to the pivot plate means about axes 50 and 52 which are spaced from one another.

The nut 18 is cylindrical in shape and is rotatably received within the apertures 36 to span the bifurcated end 24 of the arm 14 so as to be able to pivot about its axis 54 (which is parallel to the axis of the bight). The nut 18 has a diametrally extending threaded bore 56 therethrough in which the bolt 20 threadedly engages. The bolt 20 lies in grooves 58 and 60 formed by the bifurcated ends 24 of the arms 12 and 14 when the clamp 10 is in the closed condition. It has a head 62. When the bolt 20 is in the operating position in the groove 60 and has been screwed sufficiently into the nut 18, the bolt head 62 bears against an abutment surface 64 (formed by the remote end surfaces of the bifurcated end 24 of the arm 24) through the intermediary of a washer 62a. The surfaces forming the abutment surface 64 lie in a plane substantially parallel to the front face of arm 14.

Each bight 42 has a base portion 65 which is semi-circular in section and has a small entrance portion 66 which is rectangular in section. Thus the major part of the shape of the bight is a right cylindrical surface. The axial length of the entrance portion 66 is about one sixth of its width (the width being the twice the radius of the base portion 65). Thus the maximum depth of the bight is two thirds its width.

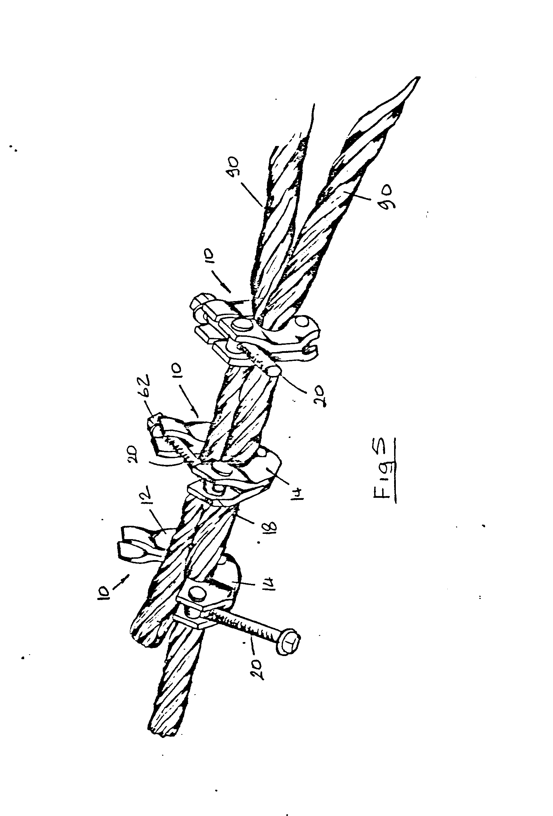

The two stampings forming each arm are stamped from a single piece 68 to form two parts 70 and 72 (that form the arm 12) and the other piece 74 to form the parts 76 and 78 (that form arm 14) (see Figures 7 and 8). The pieces 68 and 74 are identical in side view and each has a pair of spaced depressed portions 80 which lie below the level of an intermediate portion 82 and a pair of end portions 84 (best seen in Figure 9). The pieces 68 and 74 are then pierced or punched to form the apertures 30, a pair of bights 42 in the depressed portions 80 and (for the piece 74 only) a pair of larger apertures 36 in the end portions 84.

The piercing operation takes place from the upper surfaces 86 of the pieces 68 and 74. The size of the die used for the punching operation of the bight is selected so that there will be a sufficient radius on the upper surface 86 of the pieces. Thereafter the pieces 68 and 74 are cropped midway along their lengths to form the two parts which are now arranged with the depressed portions 80 butting against each other and the parts are secured together by the single weld 28.

In use, the bolt 20 is screwed substantially out of the nut 18 so that only its end is engaged in the bore 56. This is the condition in which the clamp 10 will normally be supplied. The arms 12 are now pivotted away from each other about the axes 50 and 52 and the bolt 20 is swung away from the member 14 into a remote position so that the clamp 10 is in its fully open position. A pair of ropes 90 can be brought together and guided respectively into the bights 42 (as shown in the left hand side of Figure 5). The arms 12 and 14 are now swung about the axes 50 and 52 of the pivot pins 26 by hand bringing the ropes close together. The bolt 20 is swung around until it engages in the groove 18b and is tightened by hand until the bolt head 62 engages the abutment surfaces 64 (as seen in the centre of Figure 5). The bolt 20 is now further tightened by a spanner drawing the arms 12 and 14 closer together thereby clamping the two ropes 90 together distorting them and holding them firmly to one another (as seen in the right hand side of Figure 5).

It will be noted that the distance (a) between the axis 54 of nut 18 (and bolt 20) and the axis of the pivot pin 48 is greater than (b) the distance between the axis of the pivot pin 48 and the centre of the bight 42. Indeed this first mentioned distance may conveniently be two to three times the latter distance depending upon the width of the bights 42. This provides a considerable mechanical advantage in respect of the force applied by the bolt 20 as compared to the resultant force applied by the surface of the bight 42.

I have found that the clamp 10 can exert a sufficient clamping force on the ropes to prevent them moving axially apart from one another until much greater loads are applied than can be accomodated with clamps of which I am aware as being currently available.

I have also found that the clamp 10 made in this way lends itself to efficient manufacturing techniques. I have further found the single weld 28 is adequate to hold the two parts of each arm together, it being borne in mind that the forces on the arms 12 and 14 are not forces urging the parts apart. In addition as the exposed edges of the bight are rounded, the clamp will not tend to cut into the wire rope when it is tightened.

Reference is now made to Figure 6 wherein is shown a clamp 100 is which is largely identical to the clamp 10 save that each arm is formed from a single metal part the ends of which are split, wedged and then shaped to form the bifurcations described above. The pivot plate 106 is also formed as a single member.

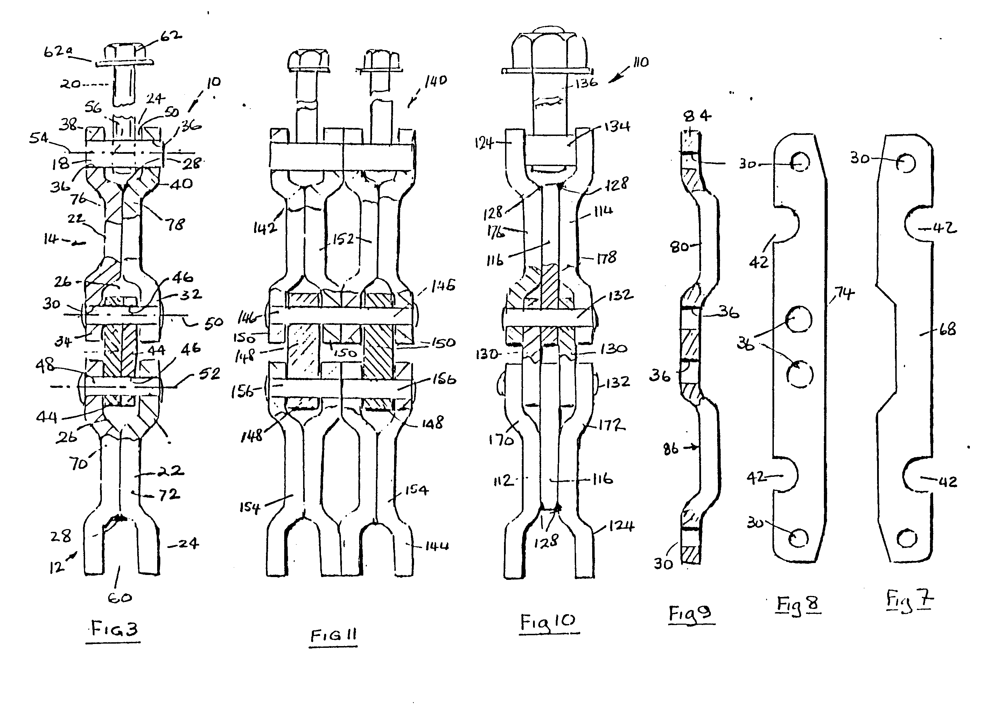

In the modified clamp 110 illustrated in Figure 10, each arm 112 and 114 of the clamp 110 comprises a pair of spacer plates 116 inserted respectively between the parts 170 and 172 and parts 176 and 178. Each spacer plate 116 extends from the base of the bifurcated ends 126, into which it protrudes to the full height of the arm, to the commencement of the bifurcated end 124. The bight (not shown in the drawings) passes through the spacer plate 116. The parts are welded by two line welds 128 to each of the side parts at the base of the bifurcations 126. The metal stampings 130 lie respectively between (a) one side part (170 and 176) and the spacer plate 116 and (b) the spacer plate 116 and other side part (172 and 178). Pivot pins 132 pass through the side parts, the spacer plate and the connecting plates so that the arms may pivot thereabout in the same manner as in the first described embodiment.

In the bifurcated end groove 124 of the arm 114, there is a cylindrical nut 134. This nut 134 can be of substantial dimensions to accomodate a much larger bolt 136 than can the nut 18 described above. Thus while in a clamp 10 for handling rope diameters of up to say 19mm, the bolt 20 may be of eight millemetres in diameter, in the present embodiment, the clamp 110 for similar size wire ropes, the bolt 136 may be twelve millemetres in diameter. Thus it will be possible for greater forces to be applied to this clamp 110 than the clamp 10 whilst still using identical arm parts and connecting plates.

In a further modification of the invention, as shown in Figure 11, the clamp is a duplex clamp 140. It comprises two clamps 142 and 144 which are substantially identical to clamp 10 (or it may be identical to clamp 110) arranged side by side. A pivot pin 146 which passes through the connecting plates 148 passes through the walls 150 of the arms of both clamps 142 and 144. The other pivot for the connecting plates 148 and arms 154 are separate pivot pins 156 each passing through one clamp 142 or 144 only. The duplex clamp 140 can thus be applied to the wire ropes 90, by first applying the arms 152 to the rope. The arm 154 of one clamp 142 is now swung around to encircle the rope, its bolt is swung over into the groove 160 and the bolt head engages the abutment surface so that this clamp 142 can be tightened. Thereafter the arm 154 of clamp 144 is swung around to engage the wire rope and the bolt engaged and tightened.

If desired the arms 152 of the clamps 142 and 144 can be further connected together by welding. The other arms should of course be free to swing separate from one another.

When the duplex clamp 140 is tightened on to the ropes, I have found that the ropes bulge between the two bights which engage the ropes and the existance of this bulge tends to improve the clamping effect of the duplex clamp 140.

In yet another modification of the invention, the clamp may be a triplex clamp, i.e. a clamp similar to duplex clamp 140 but comprising three clamps side by side on common pivot points.

In yet a further modification of the invention as is illustrated in Figure 12, the bights 162 and 164 in the arms 166 and 168 are of different sizes. This enables the clamp 170 to clamp together two wires of different diameters very efficiently.

The shapes of the bights may vary from those described above. For example as set shown in Figure 13, the bight may be have a hemi-hexagonal base 190 with a rectangular entrance portion 192 that is similar to that of the bight 42 or it may comprise a triangular base with a similar entrance - (as shown in Figure 14). Further it may be rather shallow and of generally bell shape as shown in Figure 15. In all the arrangements, (a) the distance from the deepest part of the bight to the adjacent front face of the clamp member will be less than the diameter of the rope to clamped, and will normally be about two thirds this diameter and (b) there will be space into which the rope can be distorted.

I have found that the clamps of the invention above described can exert a sufficient clamping force on the ropes to prevent them moving axially apart from one another until much greater loads are applied than can be accomodated with clamps of which I am aware.

The clamps are convenient to use as all the parts thereof are connected together so that it can be applied with ease to ropes and the only additional tool needed is the spanner to tighten the bolt. The clamps will be made for each particular nominal diameter of rope. The radius of the base 42 of the bight 14 is preferably slightly (about one or two millemetres) greater than that of the nominal radius of the rope so to permit the latter to distort in the aperture 16 when pressure is being applied. Thus typically a clamp for clamping two 16mm nominal diameter ropes has a bight the radius of which is 17mm and the axial length of the entrance portion 48 of 2,5mms. The clamp 10 can be made of mild steel in which case the rope elements will dig into the metal at the bights ensuring an even more firm attachment thereto.

The clamps are economical to manufacture and as is apparant from the above very easy to use. It can be used with wire ropes for use e.g. in the mines or by riggers. It can be used with nylon and similar ropes for e.g. marine use.

The invention is not limited to the precise constructional details hereinbefore described and illustrated in the drawings. For example the various openings may be formed by being drilled. The parts may also be cropped from drawn or rolled shaped sheet. Alternatively the members may be manufactured by extrusion and thereafter shaping and piercing and cropping and welding. Yet again, they may be manufactured by high pressure die casting.

The clamps can also be used for plastic or other ropes not of metal and for this purpose, the parts may be comprise plastic materials. Thus the clamps could be used for sailing or in other circumstances where non-corrodeable materials are required e.g. on yachts or for other marine use.

It will be noted that all the embodiments described and/or illustrated, have the following advantages:-The entire clamp is a one-piece member with no loose parts and with a substantial mechanical advantage when clamping the bolt. The clamps are easy and convenient to use. Furthermore where the clamps are made from pressed plate (as can be done with all the clamps herein described except that of Figure 6), the manufacture is relatively simple and with no slitting an wedging operations being needed.

**Claims**

A clamp comprising connector plate means - (44); a pair of clamping arms (12, 14) pivotally connected to the connector plate means at spaced locations (50, 52) and a nut (18) and a bolt (20) located at the ends (26) of the arms remote from the connector plate means and holding the clamping arms together,
characterised in that
the nut (18) is carried by one arm (14) to pivot about an axis (54) at right angles to its bore (56) and in that the bolt (20) passes through a slot (60) in the other arm (12) and is capable of swinging free from said other arm.

2. A clamp as claimed in claim 1
characterised in that
the ends (24, 26) of the clamping arms are bifurcated and the connector plate means are received between the bifurcated ends of the members.

3. A clamp as claimed in claim 1
characterised in that
the arms (12, 14) comprise flat portions at their mid-portions at least and the surfaces of each of the bights (42) is a portion of a right cylindrical surface.

4. A clamp as claimed in claim 1 characterised in that each bight (42) has a base portion (65) which is semi-circular in section and an entrance portion - (66) which is rectangular in section.

5. A clamp as claimed in claim 2 characterised in that each arm (12 and 14) comprises two shaped metal plate parts (70 and 72; 76 and 78) each having a depressed central portion (80) and outer portions - (82, 84) on each side thereof, the two central portions (80) butting one against the other and being secured together so that the said outer portions are spaced from one another to form the said bifurcated ends.

6. A clamp as claimed in claim 5 characterised in that the said central portions (80) are secured to one another by welding.

7. A clamp as claimed in claim 6 characterised in that there is single line of welding (28) which joins the two portions, the said line being at right angles to the bight.

8. A clamp as claimed in claim 5, 6 or 7 characterised in that the bight is formed by piercing and the piercing operation takes place from the same side of the each plate part so that the sharp edges of the pierced bight will be adjacent one another and the other outside edges of the will be rounded.

9. A clamp as claimed in any one of claims 5 to 8 characterised by a spacer plate (116) between the two metal parts forming each arm (See Figure 10).

10. A clamp as claimed in any one of claims 5 to 9 characterised in that it comprises at least two clamps (142, 144) arranged side by side (See Figure 11).

FIG 1

Fig 4

Fig 2

Fig 12

FIG 14

Fig 6

FIG 15

FIG 13

Fig 5

Fig 7

Fig 8

Fig 9

Fig 10

Fig 11

Fig 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 456 276 (LEYBOLD-HERAEUS) * Page 4, lines 14-24; figures 1,3 * | 1 | F 16 G 11/06 |
| X | DE-A-3 215 382 (LINNEMANN) * Page 11, lines 6-34; figures 1,3 * | 1,2 | |
| Y,D | US-A-4 179 774 (BRADBURY) * Column 2, lines 13-17; figure 1 * | 1 | |
| Y | GB-A- 736 879 (K.A.C.) * Page 2, lines 64-118; figures 1,2 * | 1 | |
| A | GB-A- 729 268 (BRITISH INSULATED CALLENDER'S CABLES) * Page 1, line 63 - page 2, line 16; figures 1,2 * | 10 | TECHNICAL FIELDS SEARCHED (Int. Cl.4)  F 16 G  E 21 D  E 02 F  H 01 R |
| A | DE-C- 637 476 (GUTEHOFFNUNGSHÜTTE OBERHAUSEN) | | |
| A,D | US-A-3 544 955 (RUIZ) | | |
| A,D | US-A-2 986 053 (ATMAN) | | |

--- -/-

The present search report has been drawn up for all claims

| Place of search | Date of completion of the search | Examiner |
|---|---|---|
| THE HAGUE | 23-02-1987 | BARON C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82

## DOCUMENTS CONSIDERED TO BE RELEVANT

Page   2

| Category | Citation of document with indication, where appropriate, of relevant passages | Relevant to claim | CLASSIFICATION OF THE APPLICATION (Int. Cl.4) |
|---|---|---|---|
| A,D | US-A-3 248 684  (HUBBARD) | | |
| | ----- | | |

TECHNICAL FIELDS
SEARCHED (Int. Cl.4)

The present search report has been drawn up for all claims

| Place of search | Date of completion of the search | Examiner |
|---|---|---|
| THE HAGUE | 23-02-1987 | BARON C. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO Form 1503 03 82